Europäisches Patentamt

European Patent Office

Office européen des brevets

(19)

(11) Publication number: **0 260 995 B1**

(12) # EUROPEAN PATENT SPECIFICATION

(45) Date of publication of patent specification: **12.08.92**   (51) Int. Cl.⁵: **B65G 54/02**, G05D 7/06

(21) Application number: **87308304.2**

(22) Date of filing: **18.09.87**

(54) Particulate material flow control and apparatus therefor.

(30) Priority: **19.09.86 GB 8622571**

(43) Date of publication of application:
**23.03.88 Bulletin 88/12**

(45) Publication of the grant of the patent:
**12.08.92 Bulletin 92/33**

(84) Designated Contracting States:
**AT BE CH DE FR GB IT LI NL SE**

(56) References cited:
**CH-A- 427 509**
**DE-A- 2 724 727**
**US-A- 3 071 705**
**US-A- 3 513 337**

(73) Proprietor: **UNIVERSITY OF SURREY**

**Guildford, Surrey GU2 5XH(GB)**

(72) Inventor: **Ghadiri, Mojtaba**
**28 Manston Road**
**Guildford, Surrey GU4 7YE(GB)**
Inventor: **Clift, Roland**
**93 Peperharow Road**
**Godalming, Surrey GU7 2PN(GB)**

(74) Representative: **Alexander, Thomas Bruce et al**
**Boult, Wade & Tennant 27 Furnival Street**
**London EC4A 1PO(GB)**

## Description

This invention relates to the control of particulate material flow and provides both a new concept and a new apparatus for this purpose.

In many processes dealing with particles or granules the transfer of material between various units has often to take place at a pre-set rate. In such circumstances, the regulation and control of the flow is an important stage in the processing and handling of such materials. At present this is accomplished by mechanical means such as a screw conveyor or a rotary star feeder, in which the material is translated forward at a rate depending on the angular speed of the screw or star. In spite of their common use in industry for control and regulation of flow of granular materials, these devices have serious drawbacks which stem from the inherent features of their design and operation. Thus, for example, the rotation of the screw against the stationary barrel causes attrition when handling delicate granules and erosion when handling hard and abrasive materials. Furthermore, the seal on the screw shaft, separating the system from the surrounding environment, is a fine component and may easily be damaged when handling dusty materials especially at elevated pressures. However, in spite of these disadvantages, there is no viable alternative at present.

This invention relates to a device which effectively performs the same task described above, but in an entirely different way. It has no moving parts and may be mounted in situ with no external mechanical connections, so that it does not suffer from the problems discussed above. It can also easily be operated at elevated temperatures and pressures. Furthermore, its capital and running costs are very small as compared to the cost of screw feeders.

The present invention is based upon the discovery that, depending upon certain factors, an electrostatic field can be applied to the dense phase flow of a particulate material in such a way as to control its flow rate. The invention in effect makes use of an electrostatic field to counteract gravitational forces, forces resulting from fluid pressure or other forces, and thereby to influence the flow of particles. Fundamentally, this result has been achieved by the discovery that in order to provide adequate flow control of the particles through a duct the geometry of the electrodes establishing the electrostatic field is critical, it being essential that an upstream electrode is provided which does not obstruct the dense phase flow of the particles to an extent which would transform the flow to the lean phase form in the space between the electrodes, thus losing continuous inter-particle contact, and that a downstream electrode is provided which impedes particle flow but not substantially in the absence of any electric field and which has an opening size therein such that it is possible ultimately to halt the flow by application of a suitably high electric field. Furthermore, it is preferable that each flowing particle passes only two electrodes during the course of its flow. The recommended electrode geometries described hereinafter would, by virtue of their configurations, yield lines of electric field which are angled against the direction of particulate material flow. This arrangement provides a wider range of controllable flow rates than when the field is parallel to the direction of flow, although the latter possibility is not excluded.

The invention is based upon the discovery of these various important factors derived as a result of the examination of many different possible electrode structures.

The invention provides apparatus for the control of particulate material flow comprising a duct through which said material is to flow having positioned in the lumen thereof an upstream electrode and a downstream electrode for establishing an electric field in the path of flowing material, the structure of the downstream electrode being of greater complexity than that of the upstream electrode, the inner surface of the duct defining the lumen in the region of the electrodes being substantially dielectric in character, and the geometry and arrangement of the electrodes being such that (a) particle flow past the downstream electrode may be impeded upon application of the electric field, and (b) flow past the upstream electrode is not disturbed significantly by the upstream electrode so as to avoid transformation of dense phase flow to lean phase flow, thereby maintaining interparticle and particle-electrode contact.

By an electrode structure of "greater complexity" as used herein is meant a structure in which the number of constituent elements is greater for the same duct unit cross sectional area.

Since the electrodes used in the present invention are relatively simple structures and can be made of inexpensive material it is possible to construct the device on a modular basis so that the electrodes can be replaced at regular intervals. It is also possible to construct the electrode elements from metallic compounds which do not wear easily.

Thus, using the above apparatus the flow of particles can be regulated by manipulating the electric field. Control of the electric field may be achieved by means of an external EHT unit which establishes the electrostatic potential between the electrodes. Flow control by manipulation of the field may be achieved in one of the following ways. If a continuous D.C. supply is used, then the voltage may be varied as required.

EP 0 260 995 B1

If a more complex wave function is used, then the frequency, pulse width and/or amplitude of the wave may be varied to control the flow of the particles. The performance of the two types of field is discussed later.

The present invention, both in its method and apparatus aspects, may be applied to any particulate or granular material which is not too conductive so as to draw excessively high currents, nor too resistive so as to draw such low currents that there is insufficient effect on flow. Most granular materials except metal powders have properties suitable for the application. The pulsating field seems to be more suitable for semi-conductive materials where the power consumption for a continuous field could be high, thus generating considerable heat, or where it may not be possible to hold a continuous field.

In general, a pair of electrodes is employed in the apparatus of the present invention. However, as will be made plain later, the downstream electrode of the pair may be constituted by an electrode arrangement comprising several separate electrode elements. In such an arrangement, the geometry should preferably be such that each particle flowing through the duct only passes through two electrode elements during the course of its flow. Although the geometry can vary widely, a single electrode element only is employed for the upstream electrode structure.

Normally, the electrodes consist of a pair of electrode meshes or wire arrangements positioned across the lumen of the duct and substantially parallel to each other. In such an arrangement, the electrodes are usually arranged substantially perpendicular to the direction of flow of the particulate material. However, the electrodes may be arranged at angles with respect to the flow and the invention includes such arrangements.

The upstream electrode may be in the form of a number of wires or a mesh or a grid, with in each case the electrode stretching completely across the lumen of the duct. Alternatively, the upstream electrode may consist quite simply of one or more protruberances or wires extending into the lumen of the duct but not passing completely across the lumen. It is also possible for the upstream electrode to be in the form of an annulus or flange, or a mechanical equivalent thereof. What is important is that the upper electrode should provide minimal obstruction to particulate material flow in order to avoid separation of the particles and subsequent transformation of the flow into lean phase form. It is thus highly preferred that the upstream electrode should be provided in the form of a relatively thin wire structure having large openings therein. In practice, the size of such openings should preferably not be much smaller than about one fifth of the largest cross-sectional dimension (diameter in the case of a cyclindrical duct) of the duct.

The downstream electrode may be in the form of a mesh or grid fixed across the lumen of the duct with the arrangement of the individual wires in such mesh or grid usually being substantially more complex and providing smaller openings therebetween than in the case of the upstream electrode. The openings may be substantially uniform or non-uniform or different areas may be chosen for uniform openings and non-uniform openings depending upon the exact application of the apparatus. It is also possible to provide a downstream electrode which is in the form of a mesh or grid with separate sections which are electrically insulated from each other and which may be set to different potential levels with respect to the potential of the upstream electrode. This enables fine control of particulate material flow through the apparatus. Unlike the upstream electrode, it is also possible to have the downstream electrode provided in the form of a number of different elements positioned at different longitudinal spacings along the duct with respect to the upstream electrode, provided that a particle travelling on a line substantially parallel to the longitudinal axis of the duct will always only pass through two electrode elements, i.e. an upstream electrode element and thereafter a downstream electrode element.

Openings in the downstream electrode structure should be large enough not to impede the flow of the particles in the absence of the electric field but not so large as to render impossible halting of particle flow by the application of the electric field. Bearing in mind that most particulate material has a variety of particle sizes therein, the minimum mesh or grid size for the downstream electrode depends strongly on the particle size distribution, and this minimum should not be smaller than approximately three times the diameter of the largest particles present in the flowing material. Furthermore, the selection of mesh or grid size in the downstream electrode depends in part on the electrical conductivity of the material which is flowing and the nature of the applied electric field.

Thus, in the downstream electrode a mesh size of typically around 10 to 15 particle diameters can give satisfactory operation for most types of particulate materials for a field strength up to about 800 kVm$^{-1}$. In contrast, a satisfactory opening size for the upstream electrode is usually larger than about 20 to 30 particle diameters.

Downstream electrodes with non-uniform opening sizes should in principle give an extended range of flow. The extension of non-uniformity into the ideas of electrical non-uniformity by partitioning the downstream electrodes into several sections insulated from each other and each having its own grid or mesh area and a corresponding EHT supply enables the potential between the upstream electrode and each of these sections to be set at a selected and different level. This can materially assist in providing fine tuning for flow control.

The distance between upstream and downstream electrodes depends upon the applied electric potential, the conductivity of the material which is flowing and the required uniformity of the field between the electrodes. By way of illustration, with an electrode spacing of approximately 35 mm a potential as high as about 30 kV may be applied without frequent breakdown of the field. Using coal or sand as the particulate material and with a spacing between electrodes of this nature, potentials higher than 25 kV have not been found to be necessary.

As indicated above, the present invention includes a method for the control of particulate material flow comprising passing said material through a duct having positioned in the lumen thereof an upstream electrode and a downstream electrode establishing a continuous DC field or a pulsating DC field in the path of the flowing material, the structure of the downstream electrode being of greater complexity than that of the upstream electrode, the inner surface of the duct defining the lumen in the region of the electrodes being substantially dielectric in character, and the geometry and arrangement of the electrodes being such that (a) particle flow past the downstream electrode may be impeded upon application of the electric field, and (b) flow past the upstream electrode is not disturbed significantly by the upstream electrode so as to avoid transformation of dense phase flow to lean phase flow, thereby maintaining interparticle and particle-electrode contact, and altering the strength of the electric field (for the case of a continuous field) or its frequency, pulse width or amplitude (for the case of a pulsating field) as necessary to achieve the desired control of flow.

Preferably, each particle of the material passes through only two electrodes during the course of its flow.

It is also preferred that electric field lines of force are established between the electrodes which are angled against the direction of particulate material flow.

It is important to distinguish in the present invention between flow control (which is the concern of the invention) and merely being able to use an applied electric field to prevent particle flow altogether or to contain particulate material within a particular area of an apparatus. The control of flow as such presents wholly new problems and has resulted in the new electrode design which is the essence of the present invention and many examples of which are illustrated hereinafter.

The invention will now be further described and illustrated by reference to the accompanying drawings, in which:-

FIGURE 1 shows in schematic form the essential elements of the preferred electrode arrangement for the apparatus of the present invention;

FIGURE 2 shows an alternative electrode configuration for the apparatus of the present invention;

FIGURE 3 shows a number of possible upstream electrode configurations for use in the present invention;

FIGURE 4 shows a number of possible downstream electrode configurations for use in the present invention;

FIGURE 5 shows an electrode arrangement which has been employed in various tests of the present invention and which has been found to work well;

FIGURE 6 is a schematic diagram of an apparatus assembly used in testing the present invention;

FIGURES 7, 8 and 9 give the results of tests as aforesaid; and

FIGURE 10 is an illustration of an electrode configuration not in accordance with the invention and which cannot be made to operate in accordance with the invention (given for comparative purposes only).

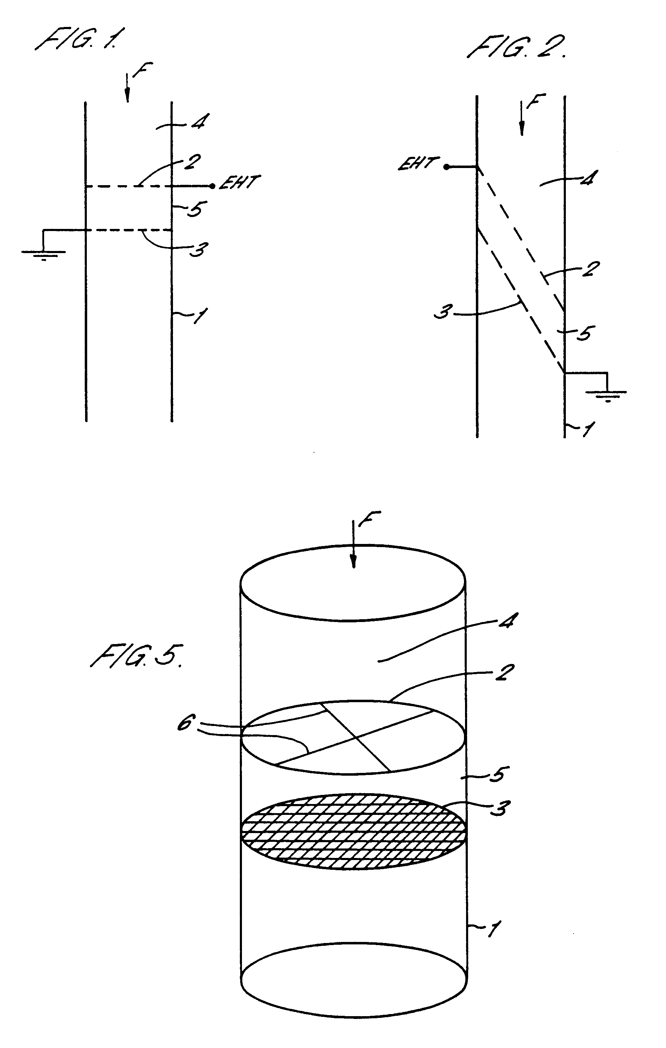

Referring first to FIGURE 1, a duct (1) carries electrodes (2 & 3) across the lumen (4) thereof. Upstream electrode (2) has a geometry such that the electric field established by the EHT connected to this electrode provides lines of force which are suitably angled against the direction of particle flow indicated by arrow (F) and is made of sufficiently thin wire so that the particulate material mass flow is not significantly disturbed to cause transformation of flow to lean phase form. The inner wall of duct (1) between electrodes (2 & 3) either has a dielectric surface (5) or is itself entirely a dielectric material.

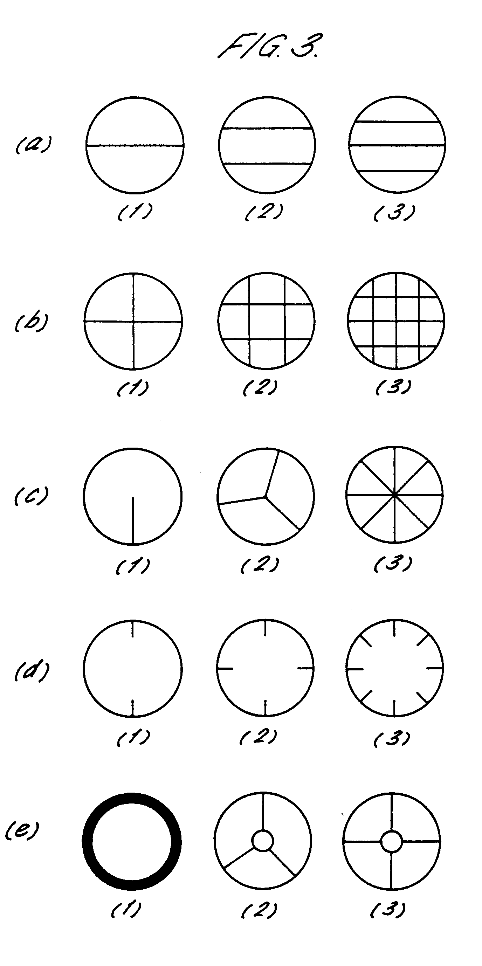

In FIGURE 2 the structure is essentially similar to that shown in FIGURE 1, the same reference numerals being used for the corresponding parts in both Figures, except that the orientation of electrodes (2 & 3) is not substantially perpendicular to the direction of flow (F) but is angled against the direction of flow. Particular applications of the present invention may well in some cases suggest this arrangement as being preferred to the arrangement shown in FIGURE 1. In essence, however, the structures of FIGURES 1 and 2 are functionally identical.

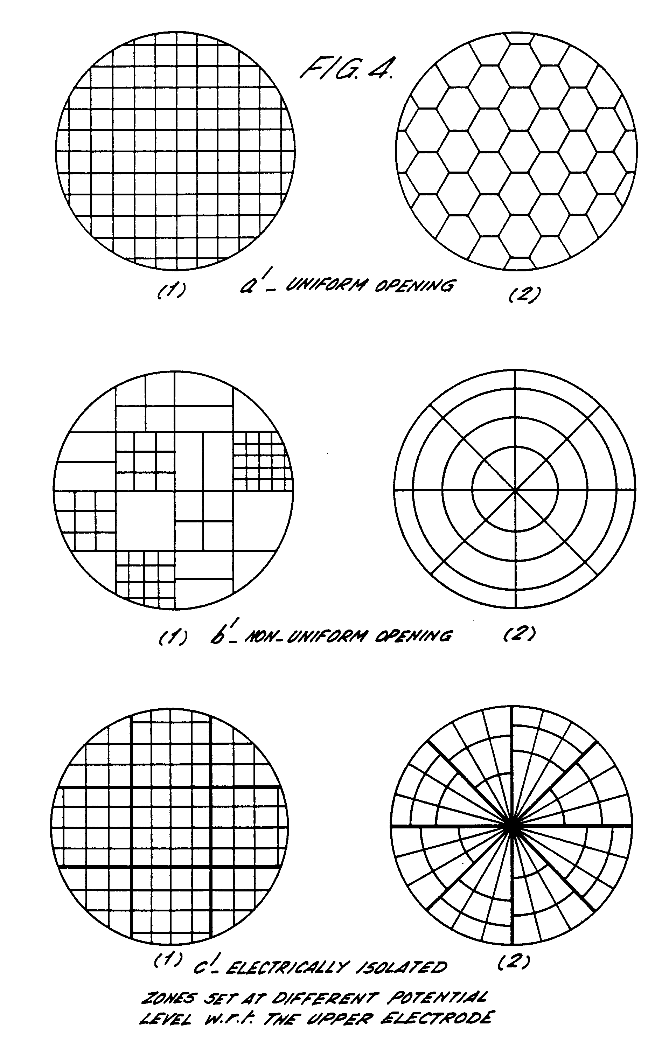

Turning now to FIGURE 3, it will rapidly be deduced by the skilled reader upon examination of the variety of upstream electrode geometries illustrated therein that, within the constraints noted above, there is an infinite possibility of structures which may be used. It will also readily be appreciated that the constraints imposed on electrode goemetry which are essential in the present invention cannot be achieved if the geometry of the upstream and downstream electrodes is identical.

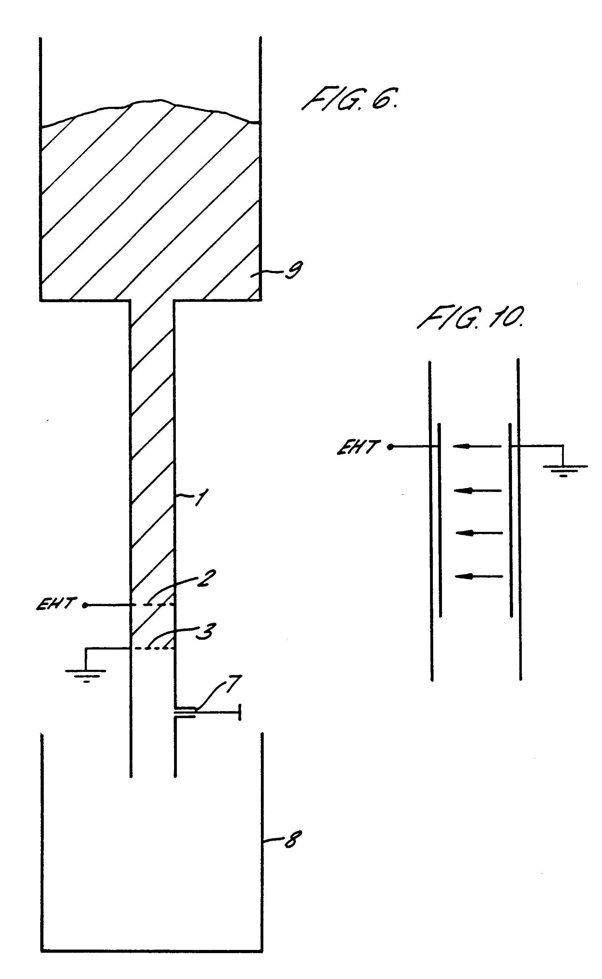

Reference to FIGURE 4 gives an idea of the infinity of possible downstream electrode geometries which may be employed. It will, however, be noted that even where a uniform rectilinear grid pattern is employed as in the upper left hand structure illustrated in this figure, the corresponding grid pattern for the upstream electrode which may be used (b3 in FIGURE 3) has a less complex or less tightly packed structure, thus meeting the requirement of minimal obstruction and also enabling the establishment of the angled electric field. Further discussion of the nature of the form of the electric field is given hereinafter.

Also with reference to FIGURE 4, it is worth noting that the two bottom structures illustrated each have various electrically isolated zones which may be set at different potential levels with respect to an upstream electrode. In the figure the various zones are bounded by the heavy dark lines representing electrical insulation.

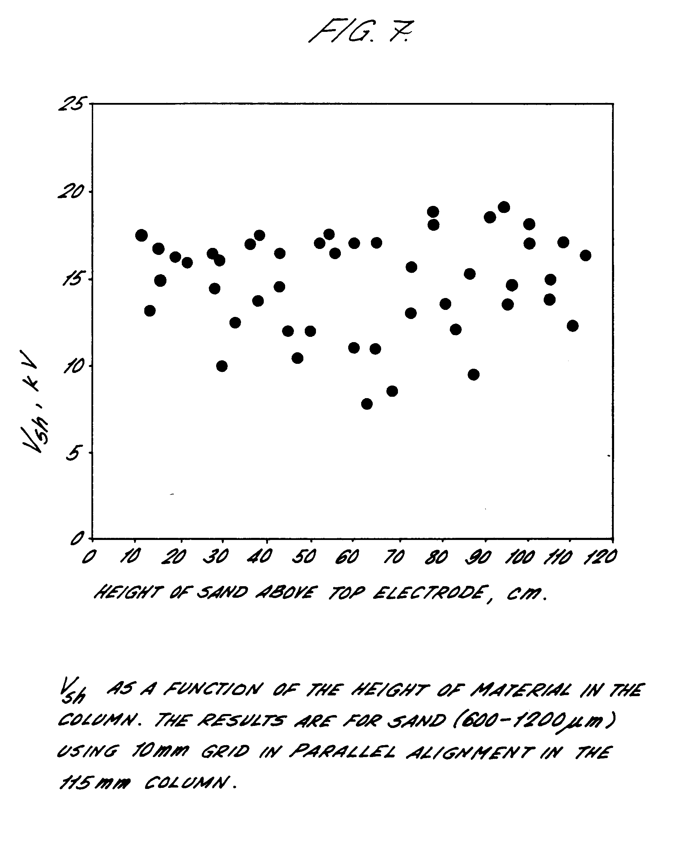

Turning now to FIGURE 5, a preferred and simple electrode geometry is shown which achieves the objectives of the present invention. In this arrangement, upper electrode (2) consists essentially of cross wires (6) aligned at 45° on horizontal projection with respect to the direction of wires in the lower electrode (3). The structure of lower electrode (3) is a square arrangement wire mesh grid, the openings in which may, for example, be 5 or 10 mm width openings.

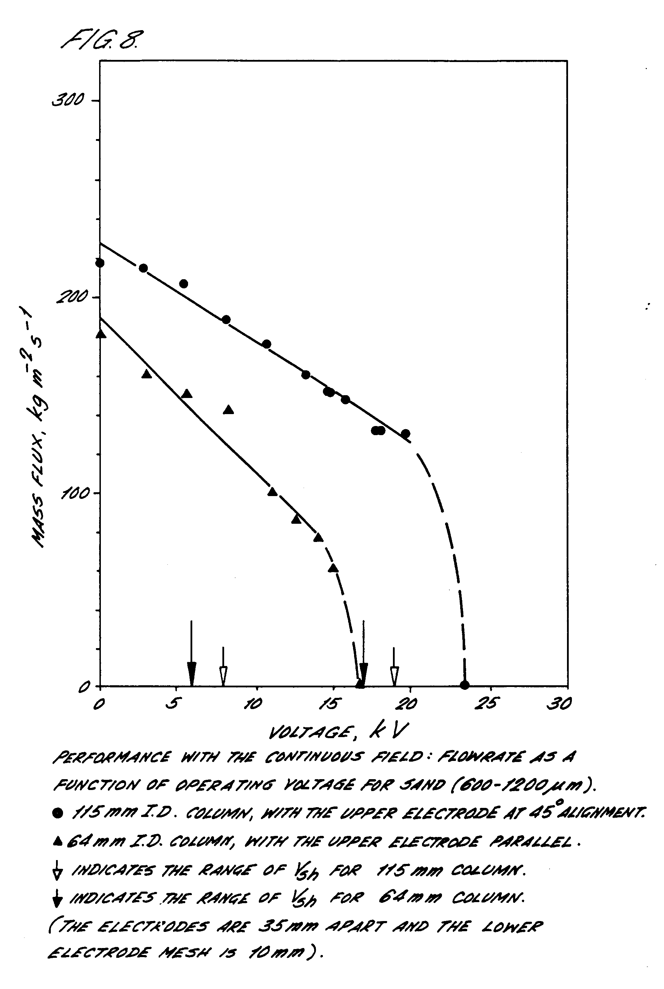

The feasibility of the present inventive concept may be illustrated by work on apparatus of two different scales, i.e. using columns or ducts of 64 mm and 115 mm inner diameter, and with two types of particulate material, i.e. sand and coa. FIGURE 6 shows a schematic diagram of the assembly used for these tests. Electrodes (2 & 3) are installed within duct (1) and connected externally to an EHT supply and the earth. The electrode arrangement used is as shown in FIGURE 5 and discussed hereinabove. A slide valve or flap door (7) is provided downstream of the pair of electrodes; this valve or door is initially closed when filling duct or column (1) and a storage reservoir (9) but is left open thereafter as the particles can be supported by the application of an electrostatic field. A collection vessel (8) is provided for retaining particulate material which has flowed through duct (1).

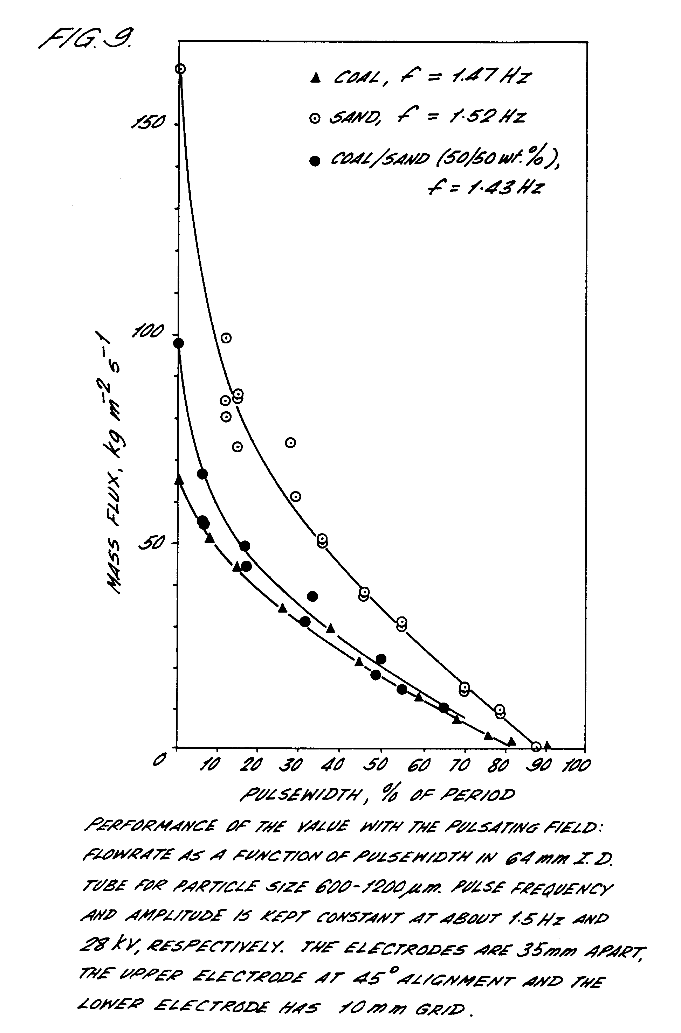

Using a continuous DC field, if the electrostatic potential is already set up to a suitably high level before opening the valve (7), the particles between the electrodes (2 & 3) are 'frozen', and no particle will flow when the valve (7) is opened except those lying below the lower electrode (3) which drop off as a plug. However, on lowering the electrostatic potential a point is reached below which the material starts to flow. This is referred to as the static holding voltage threshold, $V_{sh}$. As shown in FIGURE 7, $V_{sh}$ is effectively independent of the height of material above the electrode, but is scattered within a range. The scatter is believed to be due to the inherent instability of the system near flowing conditions. The upper limit of $V_{sh}$ is of interest here as it represents the maximum possible potential required to prevent the granular material flowing from a static state. Its values for the systems investigated are given in Table 1 hereinafter.

If the material is allowed to flow and then a potential is applied to the electrodes (2 & 3), the flowrate decreases to a steady-state value which depends on the applied voltage. FIGURE 8 shows the flowrate as a function of operating voltage for sand in the size range 0.6-1.2 mm for 64 mm and 115 mm diameter ducts, using a 10 mm wire mesh grid as the lower electrode. The response appears to be fairly linear up to about 15 kV and 20 kV for the 64 mm and 115 mm ducts, respectively. However, on increasing the voltage to 17 kV and 23 kV for the two ducts or columns, respectively, the flowrate falls off to zero very rapidly.

The limits of $V_{sh}$ for the two ducts or columns are also indicated on the abscissae. The voltage required to halt the flow of material, i.e. the dynamic holding voltage, $V_{dh}$, is thus seen to be near the upper limit of $V_{sh}$ for the smaller column, and greater than that for the larger column. The results clearly show that it is possible to have flow within the voltage range where the material can be held if it is already at rest. However, operation in the range shown by the broken line in FIGURE 8 is

Table 1  The maximum voltage required to hold the material already at rest.

| Material | Column/ Duct Size, mm | Lower Electrode Opening, mm | Alignment | Particle Size, mm | $V_{sh}$ Upper value, kV |
|----------|------------|------------|-----------|-----------|-----------|
| Sand | 64 | 5 | 45 | 0.3-0.6 | 11.0 |
| | | | | 0.6-1.2 | 10.3 |
| | | 10 | 45 | 0.6-1.2 | 17.5 |
| | | | | 1.2-2.4 | 15.5 |
| | 115 | 5 | 0 | 0.3-0.6 | 18.3 |
| | | | | 0.6-1.2 | 18.0 |
| | | 10 | 0 | 0.6-1.2 | 19.0 |
| | | | | 1.2-2.4 | 17.5 |
| Coal | 64 | 10 | 45 | 0.3-1.4 | 4 |
| | 115 | 10 | 0 | 0.6-1.19 | 11 |
| Coal/ Sand (50:50 wt%) | 115 | 10 | 0 | 0.6-1.18 | 14.5 |

unstable and difficult to control. The rapid decrease and instability in the flow in the region immediately below $V_{dh}$ is due to formation of semi-stable arches or bridges over the lower electrode openings. These collapse periodically under normal stress, exerted by the weight of material on top, thus making it impossible to obtain continuous and reproducible flowrates when using the continuous DC field. As will be seen below, the use of pulsating DC field is preferable for very low flow rates.

The flowrates have been converted to mass flux in FIGURE 8 to provide a common basis for comparison of the performance of the two column sizes. The difference between the intercepts indicates the effect of column size, while the difference between the slopes is thought to be due to the change in the uniformity of the field resulting from the scale-up of electrodes. In conclusion, it is possible to vary the flowrate from the full flow (no imposed field) state down to about 50% of the full flow by application of a continuous DC potential. It is also possible to reduce the flowrate further by optimising the electrode configuration, but such a system is unlikely to be able to operate at very low flowrates due to the restriction imposed by the dynamic holding voltage.

Using, in contrast, a pulsating DC field, the pulse amplitude frequency and width can all be varied in order to obtain a desired flowrate. However, for the purpose of demonstrating the performance of the pulsating field, the pulse amplitude and frequency were fixed and only the pulse width varied. The pulse amplitude was set at 28 kV which is greater than the dynamic holding voltage for both sand and coal in order to ensure that the flow is halted in the shortest possible time. The pulse frequency was set at 1.5 Hz, representing a typical value. There should be an upper limit for the frequency which depends on the charge relaxation time of the particles, but this has not been quantified yet.

FIGURE 9 shows the results of tests on sand, coal and a mixture of sand and coal in equal proportions by weight for the 64 mm column. The tests for coal were carried out under a nitrogen atmosphere to avoid any risks of a coal dust explosion, while those for sand and sand/coal mixture were carried out in atmospheric air, but vented for the latter. The results show that the flowrate decreases with increasing pulsewidth almost exponentially initially but becoming more linear at larger values of the pulse width and eventually reaching zero at pulse widths around 80 to 90%. It is worth noting that the scatter in the data is also reduced as the pulse width is increased. The scatter for the coal/sand mixture is more than that for the sand or coal alone at pulse widths greater than 30%, which could be due to possible non-uniformities of the mixture in the tests.

It may thus be concluded that it is possible to obtain very small flowrates using the pulsating field and that the accuracy improves as the pulse width is increased. However, the response at small values of pulse width is too fast to be satisfactory for control purposes. In this respect the performance of the pulsating field is the opposite of the continuous field. In fact, it is advantageous to use a continuous field for large flowrates and a pulsating field for small flowrates.

As mentioned many times above, electrode geometry and arrangement plays a crucial role in the success of the present invention. Further to illustrate this point, alternative electrode configurations of two basic types were studied. First, an arrangement was examined in which the particles when flowing, instead of passing through the electrodes as such, merely passed by them, with the electrodes being arranged as parallel plates installed on opposite sides of the duct wall (giving rise to an electric field across the lumen of the duct rather than substantially in the direction of the longitudinal axis of the duct). Reference is made to FIGURE 10. The second alternative system examined employed the arrangement shown in FIGURE 1 but with two wire mesh grids of the same opening size installed in duct (1) as electrodes (2 & 3).

In the first arrangement described, and reference is made to FIGURE 10 of the drawings in this context in which the direction of the electric field is shown by the horizontal arrows, the particles could be held initially between the electrodes, but once they were set in motion, by lowering the potential below the static holding threshold voltage, the flow could no longer be regulated or even halted by manipulating the potential.

The initial holding of the particles appears to be partly due to string formation between the electrodes and partly due to bridging on the top of the electrodes, aided by the same mechanism. It is observed that as the potential is lowered below $V_{sh}$, the material between the electrodes drops as a plug first and then as the potential is reduced further the bridge on top of the electrodes breaks down, thus initiating the flow. The loss of control could be attributed to weakness of the bridge and the charging of the particles upon dynamic contact with the electrodes. As the contact between the particles themselves and then with the electrodes is broken at the onset of flow, the electrical force holding the particles together diminishes greatly and the electrode surface can no longer hold the particles. Furthermore, the particles immediately next to these surfaces could be charged dynamically, thus repelling each other and the electrode surface.

Using the second alternative structure, i.e. two wire-mesh grids having the same size of openings, it was found that it was possible to control the flow using a suitable mesh size but the operation was not reliable and loss of control occurred frequently, especially at high flowrates. On these occasions the gap between the electrodes became gradually devoid of any particles and only the top electrode supported the particles. However, this situation was not stable, due to the weakness of the field on top of the upper electrode, resulting in uncontrollable flow. The use of several grids resulted in the same behaviour.

The emptying of the gap is attributed to the transformation of particle flow between the electrodes from dense phase to lean phase form caused by the obstruction of the upper electrode. It should be noted that the system would function only when the material between the electrodes is moving in dense phase form. Thus, this electrode design is suitable only if there is no flow, the very antithesis of the purpose of the present invention.

In general, the presence of the electric field produces interparticle forces which give rise to a tendency for string formation by the particles in the space between the electrodes. As the electric field is increased, the bonds between the particles are strengthened. However, it is only by using the electrode geometry of the present invention that the above phenomenon can be utilized effectively to retard the particle flow. The flow of particles through the lower electrode is frictional, i.e. the particles move relative to each other in this region due to the presence of the lower electrode in the path of the particles. The interparticle force generated by the electric field therefore increases the yield and shear stresses in this region, thus slowing down the movement of the particles. The alternative geometries discussed above do not allow this mechanism to operate. On application of a sufficiently high electric field, the particles form stable bridges or arches over the lower electrode, hence halting the flow completely.

Thus, neither of the alternative structures was able to influence and control flow in the way envisaged in the present invention. With this point in mind, and with further reference to FIGURE 10 of the accompanying drawings, it should be understood that when it is stated herein and in the claims hereinafter that "each particle of the material preferably passes through only two electrodes during the course of its flow" this is intended to draw a clear distinction between the type of structure shown in FIGURE 10 and even the simplest arrangements where the resulting imposed electric field is substantially in the same direction as the longitudinal axis of the duct. Thus, observing the simple electrode structure shown in FIGURE 3 at c1 it can be seen that even though this upstream electrode is merely a single radial wire positioned in the duct, the flowing material effectively passes through the structure in a way which it does not do with the arrangement shown in FIGURE 10 (where the electrodes are bypassed by the flow). The words "passes through" are to be construed accordingly. Apart from the purely geometrical considerations, the electrode geometries proposed here, by virtue of sparsity of elements in the upstream electrode, produce lines of field which are angled against the direction of flow. It is found that this arrangement gives a wider range of controllable flow rates than when the field is parallel to the direction of particulate material flow.

It should also be noted that in the foregoing detailed description reference has sometimes been made to "upper" and "lower" electrodes and like expressions. It will be understood that this is for the sake of convenience; only in many applications, even where gravity is the motive force in inducing flow in the particulate material, the orientation of the duct will be far from vertical and may, indeed, be horizontal (where the words "upper" and "lower" have no significance and the terms "upstream" and "downstream" are more appropriate).

It should also be noted that the "duct" of the present apparatus can have any desired cross-section, circular, square, rectangular, polygonal or irregular. The duct can even, for example, be an annular cavity between concentrically arranged walls. In each case the skilled man will have no difficulty, given the present disclosure, in designing an appropriate electrode arrangement to provide the correct "shape" of electric field.

The possible applications of the apparatus and method of the present invention are literally legion. A large number of industries in the fields of power generation and chemical and process engineering are interested in the flow control of granular materials in their processes. The present invention presents substantial savings in capital and maintenance cost as well as occupying no additional space and providing ease of use under adverse conditions such as elevated pressures and temperatures. In addition to direct application to situations where direct metering of the flow is required, the invention has considerable potential for use in hoppers, silos and bins. In these systems the material usually flows out through a small opening in the bottom of the vessel by gravitational forces, and the flowrate is controlled by the opening size. However, the opening is very prone to blockages. It is possible to have a much larger opening and use the device proposed here to control the flow, hence reducing the risk of blocking. Furthermore, it is possible to avoid compaction of the material upon consolidation in these systems in the first place by installing the appropriate electrodes within the vessel. It is common practice to install objects within the vessel to break up aggregates formed by compaction. However, the success of this approach depends strongly on the mechanical properties of the material, and can in some instances even have negative effects. In contrast, the insertion of the electrodes in the vessel prevents compaction in the first place. An artificial consolidation is imposed on the material between the electrodes which is controllable. Again, by manipulating the electric field it is possible to provide a uniform and reliable flow in silos.

Enough has been said above to make it plain that the principle of the present invention, once appreciated, is of exceptionally wide applicability and of exceptionally numerous possible embodiments. Although many specific structures have been mentioned in this present description, it will be clearly appreciated that the invention is not limited thereto in any way provided that the general principles as set out, are secured. The provision of alternative electrode structures securing these operating principles is a matter well within the capabilities of the man of ordinary skill in the art, and such further and alternative structures or modifications of the specific structures described herein are included within the scope of the claims.

**Claims**

1. Apparatus for the control of particulate material flow comprising a duct (1) through which said material is to flow having positioned in the lumen (4) thereof an upstream electrode (2) and a downstream electrode (3) for establishing an electric field in the path of flowing material, the structure of the downstream electrode being of greater complexity than that of the upstream electrode, the inner surface (5) of the duct defining the lumen in the region of the electrodes being substantially dielectric in character, and the geometry and arrangement of the electrodes being such that (a) particle flow past the downstream electrode may be impeded upon application of the electric field, and (b) flow past the upstream electrode is not disturbed significantly by the upstream electrode so as to avoid transformation of dense phase flow to lean phase flow, thereby maintaining interparticle and particle-electrode contact.

2. Apparatus as claimed in claim 1, wheren the geometry and arrangement of the electrodes (2, 3) is such that, in use, electric field lines of force between the electrodes are angled against the direction of particulate material flow.

EP 0 260 995 B1

3. Apparatus as claimed in claim 1, wherein a downstream electrode (3) is provided in the form of a mesh or grid of any suitable geometry, fixed across the lumen (4) of the duct (1).

4. Apparatus as claimed in claim 3, wherein the mesh or grid is arranged to provide openings of substantially uniform size therein.

5. Apparatus as claimed in claim 3, wherein the mesh or grid is arranged to provide openings of substantially non-uniform size therein.

6. Apparatus as claimed in any one of claims 3 to 5, wherein the mesh or grid is in sections which are electrically isolated from each other such that said sections may be set at different potential levels with respect to the potential of an upstream electrode (2).

7. Apparatus as claimed in any one of claims 1 to 6, wherein an upstream electrode (2) is provided in the form of a number of wires or a mesh or grid of any suitable geometry, in each case said upstream electrode stretching across the lumen (4) of the duct (1).

8. Apparatus as claimed in any one of claims 1 to 6, wherein an upstream electrode (2) is provided in the form of one or more protruberances into the lumen (4) of the duct (1) which do not stretch completely across the lumen.

9. Apparatus as claimed in any one of claims 1 to 6, wherein an upstream electrode (2) is provided in the form of an annulus or flange.

10. Apparatus as claimed in any one of claims 1 to 9, wherein the electrodes (2, 3) are positioned substantially perpendicular to the longitudinal axis of the duct (1).

11. Apparatus as claimed in any one of claims 1 to 10, wherein the electrodes (2, 3) are substantially parallel to each other.

12. A method for the control of particulate material flow comprising passing said material through a duct (1) having positioned in the lumen (4) thereof an upstream electrode (2) and a downstream electrode (3) establishing a continuous DC field or a pulsating DC field in the path of the flowing material, the structure of the downstream electrode being of greater complexity than that of the upstream electrode, the inner surface (5) of the duct defining the lumen in the region of the electrodes being substantially dielectric in character, and the geometry and arrangement of the electrodes being such that (a) particle flow past the downstream electrode may be impeded upon application of the electric field, and (b) flow past the upstream electrode is not disturbed significantly by the upstream electrode so as to avoid transformation of dense phase flow to lean phase flow, thereby maintaining interparticle and particle-electrode contact, and altering the strength of the electric field (for the case of a continuous field) or its frequency, pulse width or amplitude (for the case of a pulsating field) as necessary to achieve the desired control of flow.

13. A method as claimed in claim 12, wherein the geometry and arrangement of the electrodes (2, 3) is such that electric field lines of force between the electrodes are angled against the direction of particulate material flow.

14. A method as claimed in claim 12 or claim 13 wherein the geometry and arrangement of the electrodes (2, 3) is such that each particle of material passes through only two electrodes during the course of its flow.

15. A method as claimed in claim 12 and further defined by the specific feature of any one of claims 3 to 11.

**Revendications**

1. Appareil pour la commande de débit de matière particulaire comprenant une conduite (1) à travers laquelle ladite matière s'écoule comportant, placées dans le passage (4) de celle-ci, une électrode

9

amont (2) et une électrode aval (3) pour créer un champ électrique dans le trajet de la matière s'écoulant, la structure de l'électrode aval étant d'une plus grande complexité que celle de l'électrode amont, la surface intérieure (5) du conduit définissant le passage étant de caractère sensiblement diélectrique dans la région des électrodes, et la géométrie et l'agencement des électrodes étant tels que (a) l'écoulement de particules passant au droit de l'électrode aval peut être gêné lors de l'application d'un champ électrique, et (b) l'écoulement passant au droit de l'électrode amont n'est pas perturbé de manière significative par l'électrode amont de manière à éviter la transformation d'un écoulement en phase dense en écoulement en phase lâche, en maintenant par ce moyen le contact entre particules et entre particules et électrodes.

2. Appareil selon la revendication 1, dans lequel la géométrie et l'agencement des électrodes (2, 3) est tel que, en utilisation, des lignes de force de champ électrique entre les électrodes sont inclinées par rapport à la direction de l'écoulement de la matière particulaire.

3. Appareil selon la revendication 1, dans lequel une électrode aval (3) est prévue sous la forme d'un tamis, ou d'une grille, d'une géométrie appropriée, fixée en travers du passage (4) de la conduite (1).

4. Appareil selon la revendication 3, dans lequel le tamis, ou grille, est agencé de manière à procurer, à l'intérieur, des ouvertures de dimensions sensiblement uniformes.

5. Appareil selon la revendication 3, dans lequel le tamis, ou grille, est agencé de manière à procurer, à l'intérieur, des ouvertures de dimensions sensiblement non uniformes.

6. Appareil selon l'une quelconque des revendications 3 à 5, dans lequel le tamis, ou grille, est composé de parties qui sont isolées électriquement les unes des autres de manière à ce que les parties puissent être mises à des niveaux de potentiel différents par rapport au potentiel d'une électrode amont (2).

7. Appareil selon l'une quelconque des revendications 1 à 6, dans lequel une électrode amont (2) est prévue sous la forme d'un certain nombre de fils ou d'un tamis, ou grille, d'une forme géométrique quelconque appropriée, dans tous les cas ladite électrode amont étant tendue en travers du passage (4) de la conduite (1).

8. Appareil selon l'une quelconque des revendications 1 à 6, dans lequel une électrode amont (2) est prévue sous la forme d'une ou plusieurs protubérances à l'intérieur du passage (4) de la conduite (1) qui ne sont pas tendues complètement en travers du passage.

9. Appareil selon l'une quelconque des revendications 1 à 6, dans lequel une électrode amont (2) est prévue sous la forme d'un anneau ou collerette.

10. Appareil selon l'une quelconque des revendications 1 à 9, dans lequel les électrodes (2, 3) sont placées de manière sensiblement perpendiculaire à l'axe longitudinal de la conduite (1).

11. Appareil selon l'une quelconque des revendications 1 à 10, dans lequel les électrodes (2, 3) sont sensiblement parallèles les unes aux autres.

12. Procédé pour la commande de débit de matière particulaire comprenant le passage de ladite matière à travers une conduite (1) comportant placées dans le passage (4) de celle-ci une électrode amont (2) et une électrode aval (3) établissant un champ de courant continu uniforme ou un champ de courant continu pulsé dans le trajet de la matière s'écoulant, la structure de l'électrode aval étant d'une plus grande complexité que celle de l'électrode amont, la surface intérieure (5) du conduit définissant le passage étant de caractère sensiblement diélectrique dans la région des électrodes, et la géométrie et l'agencement des électrodes étant tels que (a) l'écoulement de particules passant au droit de l'électrode aval peut être gêné lors de l'application d'un champ électrique, et (b) l'écoulement passant au droit de l'électrode amont n'est pas perturbé de manière significative par l'électrode amont de manière à éviter la transformation d'un écoulement en phase dense en écoulement en phase lâche, en maintenant par ce moyen le contact entre particules et entre particules et électrodes, et en modifiant l'intensité du champ électrique (dans le cas d'un champ uniforme) ou sa fréquence, sa largeur ou son amplitude d'impulsion (dans le cas d'un champ pulsé) comme nécessaire pour obtenir la commande de débit souhaitée.

**13.** Procédé selon la revendication 12, dans lequel la géométrie et l'agencement des électrodes (2, 3) est tel que des lignes de force de champ électrique entre les électrodes sont inclinées par rapport à la direction de l'écoulement de la matière particulaire.

**14.** Procédé selon la revendication 12 ou la revendication 13, dans lequel la géométrie et l'agencement des électrodes (2, 3) est tel que chaque particule de matière traverse seulement deux électrodes au cours de son écoulement.

**15.** Procédé selon la revendication 12, et défini en outre par la particularité spécifique de l'une quelconque des revendications 3 à 11.

**Patentansprüche**

**1.** Vorrichtung zur Steuerung der Durchflußmenge eines körnigen oder pulverförmigen Materials, mit einem Strömungskanal (1), durch welchen das Material fließt und welcher in seinem Lumen (4) eine in Fließrichtung vordere Elektrode (2) und hintere Elektrode (3) aufweist, um im Strömungsweg des Materials ein elektrisches Feld zu erzeugen, wobei die hintere Elektrode eine komplexere Struktur hat als die vordere, die das Lumen begrenzende innere Oberfläche (5) des Strömungskanals im Bereich der Elektroden im wesentlichen dielektrischer Natur ist und die räumliche Gestaltung und Anordnung der Elektroden derart sind, daß (a) der Partikelstrom an der hinteren Elektrode vorbei bei Anlegung des elektrischen Feldes gehemmt werden kann und (b) der Strom an der vorderen Elektrode vorbei nicht wesentlich durch die vordere Elektrode behindert wird, so daß ein Übergang von einer dichten Phase zu einer dünnen Phase der Strömung vermieden wird und dadurch der Kontakt zwischen den Partikeln sowie der Partikel-Elektrode-Kontakt aufrecht erhalten werden.

**2.** Vorrichtung nach Anspruch 1, **dadurch gekennzeichnet,** daß die räumliche Gestaltung und Anordnung der Elektroden (2, 3) derart sind, daß während des Gebrauchs Kraftlinien des elektrischen Feldes zwischen den Elektroden einen Winkel bilden mit der Fließrichtung des körnigen oder pulverförmigen Materials.

**3.** Vorrichtung nach Anspruch 1, **dadurch gekennzeichnet,** daß eine hintere Elektrode (3) vorgesehen ist in Form eines Geflechts oder Gitters einer geeigneten Gestaltung, welches über das Lumen des Strömungskanals hinweg befestigt ist.

**4.** Vorrichtung nach Anspruch 3, **dadurch gekennzeichnet,** daß das Geflecht oder Gitter mit Öffnungen von im wesentlichen gleicher Größe versehen ist.

**5.** Vorrichtung nach Anspruch 3, **dadurch gekennzeichnet,** daß das Geflecht oder Gitter mit Öffnungen von im wesentlichen ungleicher Größe versehen ist.

**6.** Vorrichtung nach einem der Ansprüche 3 bis 5, **dadurch gekennzeichnet,** daß das Geflecht oder Gitter in elektrisch gegeneinander isolierte Bereiche unterteilt ist, so daß diese Bereiche mit Bezug auf das Potential der vorderen Elektrode (2) auf unterschiedliche Potentiale einstellbar sind.

**7.** Vorrichtung nach einem der Ansprüche 1 bis 6, **dadurch gekennzeichnet,** daß eine vordere Elektrode (2) vorgesehen ist in Form einer Anzahl Drähte oder eines Geflechts oder Gitters einer geeigneten Gestaltung, wobei sich in allen Fällen die vordere Elektrode über das Lumen (4) des Strömungskanals (1) hinweg erstreckt.

**8.** Vorrichtung nach einem der Ansprüche 1 bis 6, **dadurch gekennzeichnet,** daß eine vordere Elektrode (2) vorgesehen ist in Form eines oder mehrerer Vorsprünge in das Lumen (4) des Strömungskanals (1), welche sich nicht vollständig über das Lumen hinweg erstrecken.

**9.** Vorrichtung nach einem der Ansprüche 1 bis 6, **dadurch gekennzeichnet,** daß eine vordere Elektrode (2) vorgesehen ist in Form eines Rings oder Flansches.

**10.** Vorrichtung nach einem der Ansprüche 1 bis 9, **dadurch gekennzeichnet,** daß die Elektroden (2, 3) im wesentlichen quer zur Längsachse des Strömungskanals (1) angeordnet sind.

**11.** Vorrichtung nach einem der Ansprüche 1 bis 10, **dadurch gekennzeichnet,** daß die Elektroden (2, 3) im wesentlichen parallel zueinander liegen.

**12.** Verfahren zur Steuerung der Durchflußmenge eines körnigen oder pulverförmigen Materials, bei welchem dieses durch einen Strömungskanal (1) fließt, in dessen Lumen (4) sich eine in Flußrichtung vordere Elektrode (2) und eine hintere Elektrode (3) befinden, welche ein kontinuierliches oder pulsierendes elektrisches Gleichstromfeld erzeugen, wobei die hintere Elektrode eine komplexere Struktur hat als die vordere Elektrode, die das Lumen begrenzende innere Oberfläche (5) des Strömungskanals im Bereich der Elektroden im wesentlichen dielektrischer Natur ist und die räumliche Gestaltung und Anordnung der Elektroden derart sind, daß (a) der Partikelstrom an der hinteren Elektrode vorbei bei Anlegung des elektrischen Feldes gehemmt werden kann und (b) der Strom an der vorderen Elektrode vorbei nicht wesentlich durch die vordere Elektrode behindert wird, so daß ein Übergang von einer dichten Phase zu einer dünnen Phase der Strömung vermieden wird und dadurch der Kontakt zwischen den Partikeln sowie der Partikel-Elektrode-Kontakt aufrecht erhalten werden, und wobei die Stärke des elektrischen Feldes (im Falle eines kontinuierlichen Feldes) oder seine Frequenz, Pulsbreite oder Amplitude (im Falle eines pulsierenden Feldes) soweit erforderlich geändert werden, um die gewünschte Steuerung der Durchflußmenge zu erreichen.

**13.** Verfahren nach Anspruch 12, **dadurch gekennzeichnet,** daß die räumliche Gestaltung und Anordnung der Elektroden (2, 3) derart sind, daß die Kraftlinien des elektrischen Feldes zwischen den Elektroden einen Winkel bilden mit der Fließrichtung des körnigen oder pulverförmigen Materials.

**14.** Verfahren nach Anspruch 12 oder 13, **dadurch gekennzeichnet,** daß die räumliche Gestaltung und Anordnung der Elektroden (2, 3) derart sind, daß jedes Materialteilchen auf seinem Fließweg nur durch zwei Elektroden hindurchtritt.

**15.** Verfahren nach Anspruch 12 und weiter **gekennzeichnet durch** einzelne Merkmale eines der Ansprüche 3 bis 11.

FIG. 1.

FIG. 2.

FIG. 5.

F/G. 3.

FIG. 4.

(1)   a' - UNIFORM OPENING   (2)

(1)   b' - NON-UNIFORM OPENING   (2)

(1)   c' - ELECTRICALLY ISOLATED   (2)

ZONES SET AT DIFFERENT POTENTIAL
LEVEL W.R.T. THE UPPER ELECTRODE

FIG. 6.

FIG. 10.

## FIG. 7.

$V_{sh}$ AS A FUNCTION OF THE HEIGHT OF MATERIAL IN THE COLUMN. THE RESULTS ARE FOR SAND (600–1200 $\mu m$) USING 10mm GRID IN PARALLEL ALIGNMENT IN THE 115mm COLUMN.

EP 0 260 995 B1

FIG. 8.

PERFORMANCE WITH THE CONTINUOUS FIELD: FLOWRATE AS A
FUNCTION OF OPERATING VOLTAGE FOR SAND (600-1200 μm).
● 115 mm I.D. COLUMN, WITH THE UPPER ELECTRODE AT 45° ALIGNMENT.
▲ 64 mm I.D. COLUMN, WITH THE UPPER ELECTRODE PARALLEL.
▽ INDICATES THE RANGE OF $V_{sh}$ FOR 115 mm COLUMN.
▼ INDICATES THE RANGE OF $V_{sh}$ FOR 64 mm COLUMN.
(THE ELECTRODES ARE 35 mm APART AND THE LOWER
ELECTRODE MESH IS 10 mm).

FIG.9.

PERFORMANCE OF THE VALUE WITH THE PULSATING FIELD:
FLOWRATE AS A FUNCTION OF PULSEWIDTH IN 64 mm I.D.
TUBE FOR PARTICLE SIZE 600-1200 μm. PULSE FREQUENCY
AND AMPLITUDE IS KEPT CONSTANT AT ABOUT 1.5 Hz AND
28 kV, RESPECTIVELY. THE ELECTRODES ARE 35mm APART,
THE UPPER ELECTRODE AT 45° ALIGNMENT AND THE
LOWER ELECTRODE HAS 10mm GRID.